# EUROPEAN PATENT APPLICATION

(11) **EP 4 822 808 A1**
(43) Date of publication of application: **14.10.2026**
(21) Application number: 24900745.1
(22) Date of filing: 29.03.2024
(51) Int. Cl.: H01M 10/0585, H01M 10/056, H01M 10/0565, H01M 10/0562, H01M 10/052, H01M 4/13, H01M 4/02

(54) **ALL-SOLID-STATE BATTERY**

(30) Priority: 07.12.2023 KR 20230176936
(71) Applicant: SAMSUNG SDI CO., LTD., Yongin-si, Gyeonggi-do 17084 (KR)
(72) Inventor: YANG, Jinhoon, Yongin-si, Gyeonggi-do 17084 (KR); LEE, Jungho, Yongin-si, Gyeonggi-do 17084 (KR); SOHN, Juhee, Yongin-si, Gyeonggi-do 17084 (KR); SHIN, Hyuksoo, Yongin-si, Gyeonggi-do 17084 (KR)
(74) Representative: Michalski Hüttermann & Partner mbB
(86) International application number: PCT/KR2024/004118
(87) International publication number: WO 2025/121554

(57) **Abstract**

The present invention relates to an all-solid-state battery, which comprises: a cathode comprising a cathode active material layer, an anode; a solid electrolyte layer disposed between the cathode and the anode and containing a solid electrolyte and a polymer matrix, wherein the thickness (b) of the solid electrolyte layer is 30-100µm; and the polymer matrix is disposed in the solid electrolyte layer at a predetermined distance (a) from an interface in contact with the cathode, the predetermined distance (a) and the thickness (b) of the solid electrolyte layer satisfy the relationship of expression 1 below. [Equation 1] $0.05 < \left(a/b\right) < 0.5$

## Description

### TECHNICAL FIELD

Embodiments relate to an all-solid-state battery.

### BACKGROUND ART

Recently, there has been rapid progress in electric devices using batteries, e.g., mobile phones, laptop computers, and electric vehicles.

In such a battery, the development of an all-solid-state battery, which uses lithium metal as the anode, is underway. The all solid-state battery refers to a battery in which all materials are solids, e.g., a battery using a solid electrolyte. The all-solid-state battery is structurally strong because the electrolyte is solid, and thus, there is a reduced risk of fire or explosion caused by an electrolyte leakage due to external impact, or the like. The battery may be formed in various shapes.

### DETAILED DESCRIPTION OF THE INVENTION

### TECHNICAL PROBLEM

Some embodiments provide an all-solid-state battery exhibiting excellent safety and excellent ionic conductivity.

### TECHNICAL SOLUTION

Some embodiments provide an all-solid-state battery including a cathode including a cathode active material layer; an anode; and a solid electrolyte layer between the cathode and the anode and including a solid electrolyte and a polymer matrix, wherein a thickness (b) of the solid electrolyte layer is 30 µm to 100 µm, the polymer matrix is disposed within the solid electrolyte layer at a predetermined distance (a) from an interface of the solid electrolyte layer in contact with the cathode; and the predetermined distance (a) and the thickness (b) of the solid electrolyte layer satisfy the relationship of Equation 1. [Equation 1] $0.05 < \left(a/b\right) < 0.5$

### ADVANTAGEOUS EFFECTS

An all-solid-state battery according to some embodiments may exhibit excellent safety and ionic conductivity.

### DESCRIPTION OF THE DRAWINGS

FIG. 1 is a view schematically showing a main structure of an all-solid-state battery according to one embodiment.
FIG. 2 is a schematic diagram schematically showing an all-solid-state battery according to some embodiments.
FIG. 3 is a schematic diagram schematically showing an all-solid-state battery according to another embodiments.
FIG. 4 is an FE-SEM image of the all-solid-state cell according to Example 6.

### BEST MODE FOR PERFORMING INVENTION

Example embodiments will now be described more fully hereinafter. Rather, these embodiments are provided so that this disclosure will be thorough and complete, and will fully convey exemplary implementations to those skilled in the art.

Terms used in the specification is used to explain embodiments, but are not intended to be limiting. Expressions in the singular include expressions in plural unless the context clearly dictates otherwise.

The term "combination thereof may include a mixture, a laminate, a complex, a copolymer, an alloy, a blend, a reactant of constituents.

The terms "comprise", "include" or "have" are intended to designate that the performed characteristics, numbers, step, constituted elements, or a combination thereof is present, but it should be understood that the possibility of presence or addition of one or more other characteristics, numbers, steps, constituted element, or a combination are not to be precluded in advance.

In the specification, unless explicitly described to the contrary, the word "comprise" and variations such as "comprises" or "comprising" will be understood to imply the inclusion of stated elements but not the exclusion of any other element.

The terms "about" and "substantially" used throughout the present specification refer to the meaning of the mentioned with inherent preparation and material permissible errors when presented, and are used in the sense of being close to or near that value. They are used to help understand the present invention and to prevent unconscientious infringers from unfairly exploiting the disclosure where accurate or absolute values are mentioned.

In the specification, A and/or B and A or B are not exclusive terms, and indicate A, B, or both A and B.

Unless otherwise defined in the specification, it will be understood that when an element, such as a layer, a film, a region, a plate, and the like is referred to as being "on" or "over" another element, it may be directly on, connected to, or coupled to the other element or layer, or one or more intervening elements may be present.

In the present invention, "particle size" or "a particle diameter", may be an average particle diameter. Unless otherwise defined in the specification, the average particle diameter may be defined as an average particle diameter D50 indicating the diameter of particles having a cumulative volume of 50 volume % in the particle size distribution. The particle size may be measured by a method well known to those skilled in the art, for example, by a particle size analyzer, or by a transmission electron microscopic image, a scanning electron microscopic image), or a field emission scanning electron microscopy (FE-SEM). In another embodiments, a dynamic light-scattering measurement device is used to perform a data analysis, and the number of particles is counted for each particle size range, and from this, the average particle diameter (D50) value may be easily obtained through a calculation, or a laser diffraction method. The laser diffraction may be obtained by distributing particles to be measured in a distribution solvent and introducing it to a commercially available laser diffraction particle measuring device (e.g., MT 3000 available from Microtrac, Inc.), irradiating ultrasonic waves of about 28 kHz at a power of 60 W, and calculating an average particle diameter (D50) in the 50 % standard of particle distribution in the measuring device.

The term "thickness" may be measured through a photograph taken with an optical microscope such as a scanning electron microscope.

Some embodiments provide an all-solid-state battery including a cathode including a cathode active material layer; an anode; and a solid electrolyte layer disposed between the cathode and the anode and including a solid electrolyte and a polymer matrix.

In some embodiments, the polymer matrix may be disposed within the solid electrolyte layer at a predetermined distance (a) from an interface between the solid electrolyte layer and the cathode. This means that the predetermined distance (a) satisfies the relationship with the thickness (b) of the solid electrolyte layer as expressed by Equation 1. [Equation 1] $0.05 < \left(a/b\right) < 0.5$

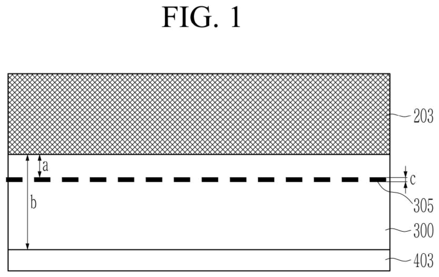

The position of the polymer matrix will be described with reference to FIG. 1, as below. The solid electrolyte layer 300 is disposed between the cathode active material layer 203 and an anode coating layer 403 of the anode, and the polymer matrix is disposed within the solid electrolyte layer 300 at a predetermined distance (a) from an interface of the solid electrolyte layer 300 that is in contact with the cathode, and, for example, and is spaced apart from an interface between the solid electrolyte layer and the cathode.

Herein, the predetermined distance (a) at which the polymer matrix is disposed and the total thickness (b) of the solid electrolyte layer may satisfy the relationship expressed by Equation 1, or the relationship expressed by Equation 2. [Equation 2] $0.05 < \left(a/b\right) < 0.3$

In Equation 1 and Equation 2, the units of the predetermined distance (a) and the thickness (b) may be micrometers, µm.

Satisfying the relationship expressed by Equation 1 between the predetermined distance (a) at which the polymer matrix is disposed and the total thickness (b) of the solid electrolyte layer indicates that the polymer matrix is disposed closer to the cathode within the solid electrolyte layer.

In particular, the polymer matrix is disposed within the solid electrolyte layer at a distance of 5% to 50%, e.g., 5% to 30% based on 100 wt% of the total thickness of the solid electrolyte layer from the interface contacting the cathode. Satisfying the relationship expressed by Equation 1 indicates that the polymer matrix is not disposed in contact with the cathode.

Even when the polymer matrix is disposed closer to the cathode within the solid electrolyte layer, a short-circuit may occur if the a/b of Equation 1 is than 0.05 or less, and for example, if the a/b of Equation 1 is 0.05 or less, the polymer matrix may be disposed in contact with the cathode, thereby causing a short-circuit. If the a/b of Equation 1 is 0.05 or less, the mechanical strength of the solid electrolyte layer is deteriorated, which is not appropriate.

Whereas, if the a/b of Equation 1 is 0.5 or more, a lithium ion transfer flux toward the anode coating layer becomes non-uniform, causing lithium to be unevenly deposited, which may result in deterioration of cycle-life characteristics. Furthermore, if the a/b of Equation 1 is 0.5 or more, interfacial adhesion strength decreases, so that lithium ions may be deposited at an interface between the solid electrolyte layer and the anode, thereby deteriorating battery characteristics, and the polymer matrix has a relatively large thickness, which may hinder ionic conductivity of lithium ions, thereby deteriorating battery performances.

If the polymer matrix is disposed within the solid electrolyte layer so as to satisfy the relationship of Equation 1, the solid electrolyte layer may exist as a free-standing film, so it may be appropriately applied to the all-solid-state battery.

Since some embodiments allow the solid electrolyte layer to exist as a free-standing film, the solid electrolyte may include a sulfide-based electrolyte whose ionic conductivity is superior to that of an oxide-based electrolyte and a polymer electrolyte. Since the sulfide-based solid electrolyte is difficult to exist as a free-standing film, a solid electrolyte layer is prepared by spraying a solid electrolyte slurry onto the cathode or the anode and adhering it, or impregnating the sulfide-based solid electrolyte into a porous substrate; however, this may result in deteriorated lithium ion transfer.

The solid electrolyte layer according to some embodiments includes the polymer matrix within the solid electrolyte layer, for example, at a specific position, so that the sulfide-based solid electrolyte layer may be included in the all-solid-state battery as the free-standing film without occurring the above shortcomings.

In some embodiments, the thickness (b) of the solid electrolyte layer may be 30 µm to 100 µm, 30 µm to 80 µm, or 40 µm to 70 µm.

If the thickness of the solid electrolyte layer is included in the range and satisfies the relationship of Equation 1, excellent cycle-life characteristic, ionic conductivity, and battery performances may be exhibited. Even if the thickness satisfies the relationship of Equation 1, if the thickness of the solid electrolyte layer is less than 30 µm, the risk of short-circuit due to the volume change during charging and discharging may be high, on the other hand, if the thickness is greater than 100 µm, a pathway for transferring lithium ions becomes longer, which may lead to electrochemical degradation.

In some embodiments, the thickness of the polymer matrix may be 5 µm to 10 µm, 6 µm to 10 µm, or 8 µm to 10 µm. If the thickness of the polymer matrix satisfies the relationship of Equation 1 and is included in the range, physical properties may be enhanced without hindering the pathway of lithium ions. For example, if the thickness of the polymer matrix falls within the range, it may provide adequate mechanical strength, enabling it to as a free-standing film, and pathways for lithium transfer may be sufficiently maintained, thereby exhibiting excellent electrochemical performances.

In some embodiments, one example of the polymer matrix may be non-woven fabric.

In some embodiments, the polymer matrix may include polyester, polyethylene terephthalate, polypropylene, polyethylene, or a combination thereof. For example, the polymer matrix may be prepared by using such a polymer. These polymers may be generally commercially available, offering excellent price competitiveness and may fully serve as free-standing film of the electrolyte owing to their good flexibility.

In some embodiments, the polymer matrix may have a porosity of 50% to 99%, 60% to 95% or 70% to 90%. If the porosity of the polymer matrix falls within the range, the pathway for lithium ion may be not hindered, and thus electrochemical performance may be well maintained. The porosity of the polymer matrix refers to the porosity of the polymer matrix itself, and since the polymer matrix within the solid electrolyte layer includes solid electrolyte impregnated into its pores, the polymer matrix in the solid electrolyte layer does not exhibit the porosity of the pure matrix. Furthermore, since the solid electrolyte is impregnated in the pores of the polymer matrix, the relationship of Equation 1 may be maintained even if pressing process is performed during the all-solid-state battery fabrication.

In the solid electrolyte layer, an amount of the polymer matrix may be, based on 100 wt% of the solid electrolyte layer, 0.01 wt% to 50 wt%, 0.1 wt% to 40 wt%, or 0.2 wt% to 30 wt%. If the amount of the polymer matrix falls within the range, the mechanical strength of the solid electrolyte layer may be further enhanced and the lithium ionic conductivity may be well maintained.

In the solid electrolyte layer, an amount of the solid electrolyte may be, based on 100 wt% of the solid electrolyte layer, 50 wt% to 99.99 wt%, or may be 60 wt% to 99.9 wt% or 70 wt% to 99.8 wt%. If the amount of the solid electrolyte is included in the range, more excellent lithium ionic conductivity may be exhibited.

As described above, in the solid electrolyte layer according to some embodiments, the solid electrolyte may be a sulfide-based solid electrolyte. Since the solid electrolyte is the sulfide-based solid electrolyte, excellent ionic conductivity and excellent cycle-life characteristics in a wide operating range may be exhibited.

In some embodiments, the sulfide-based solid electrolyte may be Li₂S-P₂S₅, Li₂S-P₂S₅-LiX (where X is an halogen element, for example, I, or Cl), Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (where m and n are each an integer of about 0 or more and about 12 or less, and Z is Ge, Zn, or Ga), Li₂S-GeS₂, Li₂S-SiS₂-Li₃PO₄, Li₂S-SiS₂-LiₚMO_{q} (where p and q are each an integer of 0 or more and 12 or less, and M is P, Si, Ge, B, Al, Ga, or In), LiₐM_{b}P_{c}S_{d}Aₑ (where a, b, c, d, and e are each an integer of about 0 or more and about 12 or less, M is Ge, Sn, Si, or a combination thereof, and A is F, Cl, Br, or I). The sulfide-based solid electrolyte may be, for example, Li₇₋ₓPS₆₋ₓFₓ (0≤x≤2), Li₇₋ₓPS₆₋ₓClₓ (0≤x≤2), Li₇₋ₓPS₆₋ₓBrₓ (0≤x≤2) or Li₇₋ₓPS₆₋ₓIₓ (0≤x≤2). In some embodiments, it may be Li₃PS₄, Li₇P₃S₁₁, Li₇PS₆, Li₆PS₅Cl, Li₆PS₅Cl, Li₆PS₅I, Li₆PS₅Br, Li_{5.8}PS_{4.8}Cl_{1.2}, Li_{6.2}PS_{5.2}Br_{0.8}, or the like.

In one embodiment, the sulfide-based solid electrolyte may be an argyrodite-type sulfide-based solid electrolyte. The argyrodite-type sulfide-based solid electrolyte may be, for example, LiₐM_{b}P_{c}S_{d}Aₑ (where a, b, c, d, and e are each an integer of about 0 or more and about 12 or less, but a, b, c, d, and e are not all 0, M is Ge, Sn, Si, or a combination thereof, and A is F, Cl, Br, or I).

In some embodiments, it may include Li₃PS₄, Li₇P₃S₁₁, Li₇PS₆, Li₆PS₅Cl, Li₆PS₅Br, Li_{5.8}PS_{4.8}Cl_{1.2}, Li_{6.2}PS_{5.2}Br_{0.8}, Li₆PS₅I, Li_{5.7}5PS_{4.75}Cl_{1.25}, (Li5.69Cu0.06)PS4.75Cl1.25, (Li5.72Cu0.03)PS4.75Cl1.25, (Li5.69Cu0.06)P(S4.70(SO4)0.05)Cl1.25, (Li5.69Cu0.06)P(S4.60(SO4)0.15)Cl1.25, (Li5.72Cu0.03)P(S4.725(SO4)0.025)Cl1.25, (Li5.72Na0.03)P(S4.725(SO4)0.025)Cl1.25, Li_{5.75}P(S_{4.725}(SO₄)_{0.025})Cl_{1.25}, or combinations thereof, but is not limited thereto.

The sulfide-based solid electrolyte may be amorphous, crystalline, or a combination thereof. The sulfide-based solid electrolyte may be prepared, for example, by mixing Li₂S and P₂S₅ at a mole ratio of about 50:50 to about 90:10, or about 50:50 to about 80:20. In the range of the mixing ratio, the sulfide-based solid electrolyte exhibiting excellent ionic conductivity may be prepared. As other components, SiS₂, GeS₂, B₂S₃, or the like may be further included thereto, thereby further improving ionic conductivity.

The mixing procedure of the sulfur-included source for preparing the sulfide-based solid electrolyte may be performed by a mechanical milling or a solution method. Mechanical milling is a method in which starting raw material, a ball mill or the like are introduced into a reactor and vigorously agitated to pulverize the starting raw material into fine particles and mix them. The solution method may provide a solid electrolyte as a precipitate by mixing starting raw material in a solvent. In addition, if the heat treatment is performed after mixing, the crystal structure of the solid electrolyte may be further stabilized and ionic conductivity may be further improved. For example, the sulfide-based solid electrolyte may be prepared by mixing sulfur-included raw materials and heat-treating them twice or more, which may provide a sulfide-based solid electrolyte with high ionic conductivity and rigidity.

The sulfide-based solid electrolyte may be a commercial solid electrolyte.

The solid electrolyte may have a particle shape. The solid electrolyte may have an average particle diameter D50 of 5.0 µm or less, for example, 0.1 µm to 5.0 µm, 0.5 µm to 5.0 µm, 0.5 µm to 4.0 µm, 0.5 µm to 3.0 µm, 0.5 µm to 2.0 µm, or 0.5 µm to 1.0 µm.

The solid electrolyte layer may further include a binder. The binder may be a styrene butadiene rubber, polytetrafluoroethylene, polyvinylidene fluoride, polyethylene, an acrylate-based polymer, or a combination thereof, but is not limited thereto, and may be any material which is generally used in the related art. The acrylate-based polymer may be butyl acrylate, polyacrylate, polymethacrylate, or a combination thereof.

In the solid electrolyte layer, an amount of the binder may be appropriately adjusted, and it is not limited thereto.

The solid electrolyte layer may further include an alkali metal salt, and/or an ionic liquid, and/or a conductive polymer.

The alkali metal salt may be, for example, a lithium salt. In the solid electrolyte layer, an amount of the lithium salt may be 1 M or more, for example, 1 M to 4 M. In this case, the lithium salt may improve the lithium ion mobility of the solid electrolyte layer, thereby improving ionic conductivity.

The lithium salt, may be, for example, LiSCN, LiN(CN)₂, Li(CF₃SO₂)₃C, LiC₄F₉SO₃, LiN(SO₂CF₂CF₃)₂, LiCl, LiF, LiBr, LiI, LiB(C₂O₄)₂, LiBF₄, LiBF₃(C₂F₅), lithium bis(oxalato) borate, LiBOB), lithium oxalyldifluoroborate, LIODFB), lithium difluoro(oxalato)borate (LiDFOB), lithium bis(trifluoro methanesulfonyl)imide, LiTFSI, LiN(SO₂CF₃)₂), lithium bis(fluorosulfonyl)imide, LiFSI, LiN(SO₂F)₂), LiCF₃SO₃, LiAsF₆, LiSbF₆, LiClO₄, or a mixture thereof.

The lithium salt may be an imide-based, for example, the imide-based lithium salt may be lithium bis(trifluoro methanesulfonyl)imide (LiTFSI, LiN(SO₂CF₃)₂), lithium bis(fluorosulfonyl)imide (LiFSI, or LiN(SO₂F)₂). The lithium salt may suitably maintain the chemical reactivity with the ionic liquid, and thus, the ionic conductivity may be maintained or improved.

The ionic liquid refers to a salt composed solely of ions that have a melting point at a room temperature or less and is in a liquid state at a room temperature, or a room-temperature molten salt.

The ionic liquid may be a compound including a) at least one cation selected from a) ammonium-based, pyrrolidinium-based, pyridinium-based, pyrimidinium-based, imidazolium-based, piperidinium-based, pyrazolium-based, oxazolium-based, pyridazinium-based, phosphonium-based, sulfonium-based, triazolium-based, or a mixture thereof, and b) at least one anion selected from BF₄⁻, PF₆⁻, AsF₆⁻, SbF₆⁻, AlCl₄⁻, HSO₄⁻, ClO₄⁻, CH₃SO₃⁻, CF₃CO₂⁻, Cl⁻, Br⁻, I⁻, BF₄⁻, SO₄⁻, CF₃SO₃⁻, (FSO₂)₂N⁻, (C₂F₅SO₂)₂N⁻, (C₂F₅SO₂)(CF₃SO₂)N⁻, or (CF₃SO₂)₂N⁻.

The ionic liquid may be, for example, at least one selected from N-methyl-N-propylpyrrolidinium bis(trifluoromethanesulfonyl)imide, N-butyl-N-methylpyrrolidinium bis (3-trifluoromethylsulfonyl)imide, 1-butyl-3-methylimidazolium bis(trifluoromethylsulfonyl)amide, or 1-ethyl-3-methylimidazolium bis(trifluoromethylsulfonyl)amide.

In the solid electrolyte layer, the weight ratio between the solid electrolyte and the ionic liquid may range from 0.1:99.9 to 90:10, for example, from 10:90 to 90:10, from 20:80 to 90:10, from 30:70 to 90:10, from 40:60 to 90:10, or from 50:50 to 90:10. The solid electrolyte layer within the range may have an improved electrochemical contact area to the electrode, and thus, the ionic conductivity may be maintained or improved. Accordingly, the energy density, discharge capacity, rate capability, or the like of the all-solid-state rechargeable battery may be improved.

### [Preparation of solid electrolyte layer]

A solid electrolyte layer according to some embodiments may be prepared by adding a solid electrolyte to a binder solution to prepare an electrolyte mixed liquid with an appropriate viscosity, coating the electrolyte mixed liquid onto a polymer matrix, and drying it. The example of the polymer matrix may be a non-woven fabric.

To describe the fabrication in more detail, the polymer matrix is first placed on a release film, after which the mixed liquid is coated onto the polymer matrix and dried, and the release film is then removed to prepare a solid electrolyte layer. The release film may include polytetrafluoroethylene, polyester, polypropylene, polyethylene, polyethylene terephthalate, or a combination thereof.

The viscosity of the electrolyte may be 500 cP to 3000 cP, or 600 cP to 2800 cP at a room temperature (20 °C to 25 °C). The position of the polymer matrix within the electrolyte may be adjusted by adjusting the viscosity of the electrolyte mixed liquid. If the viscosity of the electrolyte mixed liquid is low, the mixed liquid may penetrate into and below the polymer matrix, filling the interior of the polymer matrix and then discharging underneath it, thereby forming a thick solid electrolyte layer between the release film and the bottom of the polymer matrix. If the polymer matrix is sufficiently coated with the electrolyte mixed liquid, a solid electrolyte may also be formed as a layer on top of the polymer matrix. Accordingly, the ratio a/b of the predetermined distance (a) from the interface where the electrolyte layer contacts with the cathode and the thickness (b) of the solid electrolyte may be adjusted to be 0.5.

If the viscosity of the electrolyte mixed liquid is high, the liquid like flowability of the electrolyte mixed liquid is low, and the amount penetrating into and below the polymer matrix is somewhat reduced, so that a thin solid electrolyte layer between the release film and the bottom of the polymer matrix may be formed, while a thick solid electrolyte layer may be formed on top of the polymer matrix. Accordingly, the ratio a/b of the predetermined distance (a) from the interface where the electrolyte layer contacts with the cathode and the thickness (b) of the solid electrolyte may be adjusted to be 0.05.

For example, if an electrolyte mixed liquid having a viscosity of 500 cP is prepared and it is coated onto a polymer matrix, low viscosity allows to penetrate the electrolyte mixed liquid into and bottom of the polymer matrix, so that the ratio a/b of the predetermined distance (a) from the interface where the electrolyte layer contacts with the cathode and the thickness (b) of the solid electrolyte may be adjusted to be 0.5. Whereas, if the electrolyte mixed liquid having a viscosity of 3000 cP is prepared, the penetration of the electrolyte mixed liquid is reduced, and thus, the ratio a/b may be adjusted to be 0.05.

The drying may be carried out at 50 °C to 100 °C and may be carried out for 1 hour to 5 hours. The drying may be carried out by a vacuum-drying.

The solid electrolyte layer according to some embodiments may be prepared by adding the solid electrolyte to a binder solution to prepare a mixed liquid, coating onto a substrate film to prepare a first layer, positioning a polymer matrix on the first layer, coating the mixed liquid on the polymer matrix to prepare a second layer on the polymer matrix. Herein, the total thickness of the first layer, polymer matrix, and the second layer is the thickness of the solid electrolyte layer and thus, the thickness of the second layer may correspond to the predetermined distance (a).

Regardless of which procedure is carried out, a solvent of the binder solution may include isobutyryl isobutyrate, xylene, toluene, benzene, hexane, or a combination thereof.

The binder in the binder solution is the same binder as the described in the solid electrolyte layer.

The substrate film may be a release film and may be a release polytetrafluoroethylene film, but is not limited thereto.

In the mixed liquid preparation, alkali metal salt, and/or ionic liquids, and/or conductive polymers may be further added.

### <Anode>

The anode according to some embodiments may include an anode current collector and an anode coating layer on the anode current collector.

In one or more embodiments, the anode coating layer refers to a layer that helps the movement of lithium ions released from the anode active material to the anode during charging and discharging of the all solid-state battery, thereby facilitating their deposition on the surface of the current collector. For example, a lithium-including layer, e.g., a lithium deposition layer, due to the deposition of lithium ions between the current collector and the anode coating layer may be formed, and the lithium deposition layer acts as an anode active material, and this anode is generally referred to as a deposition-type anode. The carbon-based material and the metal included in the anode coating layer do not act as a anode active material which directly participates in the charge and discharge reaction. Such a deposition-type anode represents a anode that does not include an anode active material during the battery preparation, but the lithium deposition layer acts as an anode active material.

The anode coating layer may include a carbon-based material and a metal.

The carbon-based material and the metal may be present in a mixed state, or the metal may be supported on the carbon-based material.

The carbon-based material, may be, for example, crystalline carbon, amorphous carbon, or a combination thereof, and in some embodiments, may be amorphous carbon. The crystalline carbon may be, for example, natural graphite, artificial graphite, mesophase carbon microbead, carbon nanotube, graphene, or a combination thereof. The crystalline carbon may have unspecified shape, sheet shape, flake shape, spherical shape, or fiber shape. The amorphous carbon may be, for example, carbon black, acetylene black, denka black, ketjen black, furnace black, activated carbon, graphene, or combinations thereof. The carbon black may be Super P (available from Timcal, Ltd.). The amorphous carbon is not limited thereto, and any material which may be classified as amorphous carbon in the field may be available.

In some embodiments, the carbon-based material may be single particles or an agglomerated product that has a secondary particle form where primary particles are agglomerated. If the carbon-based material is single particles, the size of the carbon-based material may have an average particle diameter of about 100 nm or less, for example, a nanosize of about 10 nm to about 100 nm.

If the carbon-based material is an agglomerated product, the particle diameter of the primary particle may be about 20 nm to about 100 nm and the particle diameter of the secondary particle may be about 1 µm to about 20 µm.

In some embodiments, a particle diameter of the primary particles may be 20 nm to, 100 nm, 20 nm, to 90 nm, 20 nm to 80 nm, or 30 nm to 70 nm.

In some embodiments, a particle diameter of the secondary particle may be 1 µm to 20 µm, 2 µm to 15 µm, or 3 µm to 10 µm.

The shape of the primary particle may be spherical, oval, plate-shaped, or combinations thereof, and in some embodiments, the shape of the primary particle may be spherical, oval, or combinations thereof.

The metal may be Ag, Au, Sn, Zn, Al, Mg, Ge, Cu, In, Ni, Bi, Pt, Pd, or a combination thereof, or may be Ag. The inclusion of the metal in the anode coating layer may further improve the electrical conductivity of the anode.

The metal may be nano particles and the size of the metal nano particles, for example, an average size of the metal nano particles may be 5 nm to 800 nm, 5 nm to 700 nm, 5 nm to 500 nm, or 5 nm to 300 nm, however, it is not limited thereto, and any nanometers may be appropriately used. If the metal nanoparticles with nano size are used, the battery characteristics, for example, cycle-life characteristics of the all solid-state battery, may be improved. If the metal particle size increases to the micrometers, the uniformity of the metal particles in the anode coating layer may decrease, the current density in a specific area may increase, and cycle life characteristics may deteriorate, which is undesirable.

In some embodiments, an amount of the metal may be 14 wt% to 35 wt%, 18 wt% to 25 wt%, or 20 wt% to 24 wt% based on the total 100 wt% of the anode coating layer.

The amount of the carbon-based material may be 55 wt% to 80 wt%, 60 wt% to 75 wt%, or 65 wt% to 70 wt% based on the total 100 wt% of the anode coating layer.

The anode coating layer may further include a binder. The binder may be a non-aqueous-based binder.

The non-aqueous binder may be, for example, polyvinylchloride, carboxylated polyvinylchloride, polyvinyl fluoride, polyethylene oxide, an ethylene propylene copolymer, polystyrene, polyvinyl pyrrolidone, polyurethane, polytetrafluoroethylene, polyvinylidene fluoride, polyethylene, polypropylene, polyamideimide, polyimide, polyacrylate, or a combination thereof.

An amount of the binder may be 1 wt% to 15 wt% based on the total 100 wt% of the anode coating layer. For example, an amount of the binder may be 1 wt% to 14 wt%, 1 wt% to 12 wt%, 1 wt% to 10 wt%, 2 wt% to 8 wt%, or 2 wt% to 7 wt% based on the total 100 wt% of the anode coating layer.

If the binder is included in the anode coating layer at the weight range, the electrical resistance and the adherence may be improved, thereby enhancing the battery characteristics, for example, battery capacity and output characteristics of the all solid-state battery.

In some embodiments, the anode coating layer may further include a solid electrolyte. The solid electrolyte may be an inorganic solid electrolyte such as a sulfide-based solid electrolyte, an oxide-based solid electrolyte, a halide-based solid electrolyte, or the like, or solid polymer electrolyte.

The sulfide-based solid electrolyte is described above with respect to the solid electrolyte layer. The sulfide-based solid electrolyte included in the anode coating layer may be the same as or different from the sulfide-based solid electrolyte included in the solid electrolyte layer.

The oxide-based solid electrolyte may be, for example, Li₁₊ₓTi₂₋ₓAl(PO₄)₃(LTAP) (0≤x≤4), Li_{1+x+y}AlₓTi₂₋ₓSi_{y}P_{3-y}O₁₂ (0<x<2, 0≤y<3), BaTiO₃, Pb(Zr,Ti)O₃(PZT), Pb₁₋ₓLaₓZr_{1-y}Ti_{y}O₃(PLZT) (0≤x<1, 0≤y<1), Pb(Mg₃Nb_{2/3})O₃-PbTiO₃(PMN-PT), HfO₂, SrTiO₃, SnO₂, CeO₂, Na₂O, MgO, NiO, CaO, BaO, ZnO, ZrO₂, Y₂O₃, Al₂O₃, TiO₂, SiO₂, lithium phosphate (Li₃PO₄), lithium titanium phosphate(LiₓTi_{y}(PO₄)₃, 0<x<2, 0<y<3), Li_{1+x+y}(Al, Ga)ₓ(Ti, Ge)₂₋ₓSi_{y}P_{3-y}O₁₂ (0≤x≤1, 0≤y≤1), lithium lanthanumtitanate (LiₓLa_{y}TiO₃, 0<x<2, 0<y<3), Li₂O, LiAlO₂, Li₂O-Al₂O₃-SiO₂-P₂O₅-TiO₂-GeO₂-based ceramics, a Garnet-based ceramics Li₃₊ₓLa₃M₂O₁₂(M= Te, Nb, or Zr, and x is an integer of about 1 to about 10), or a mixture thereof.

The halide-based solid electrolyte may include a Li element, an M element (where M is a metal except for Li), and an X element (where X is a halogen). The X may be, for example, F, Cl, Br and I. In one embodiment, the halide-based solid electrolyte may include at least one of Br and Cl, as the X. The M may be, for example, a metal element such as Sc, Y, B, Al, Ga, In, and the like.

The composition of the halide-based solid electrolyte is not limited, but the halide-based solid electrolyte may be represented by Li₆₋₃ₐMₐBr_{b}Cl_{c} (where, M is a metal, except for Li, 0<a<2, 0≤b≤6, 0≤c≤6, b+c=6). The a may be 0.75 or more, or 1 or more, and the a may be 1.5 or less. The b may be 1 or more, or 2 or more. The c may be 3 or more, or 4 or more. The exemplary of the halide-based solid electrolyte may be Li₃YBr₆, Li₃YCl₆ or Li₃YBr₂Cl₄.

The solid polymer electrolyte may include at least one selected from, for example, polyethylene oxide, poly(diallyldimethylammonium)trifluoromethanesulfonylimide(poly(diallyldimethyl ammonium)TFSI), Cu₃N, Li₃N, LiPON, Li₃PO_{4·}Li₂S_{·}SiS₂, Li₂S_{·}GeS_{2·}Ga₂S₃, Li₂O_{·}11Al₂O₃, Na₂O_{·}11Al₂O₃, (Na,Li)₁₊ₓTi₂₋ₓAlₓ(PO₄)₃ (0.1≤x≤0.9), Li₁₊ₓHf₂₋ₓAlₓ(PO₄)₃ (0.1≤x≤0.9), Na₃Zr₂Si₂PO₁₂, Li₃Zr₂Si₂PO₁₂, Na₅ZrP₃O₁₂, Na₅TiP₃O₁₂, Na₃Fe₂P₃O₁₂, Na₄NbP₃O₁₂, Na-Silicates, Li_{0.3}La_{0.5}TiO₃, Na₅MSi₄O₁₂(M is a rare-earth element such as Nd, Gd, Dy, or the like), Li₅ZrP₃O₁₂, Li₅TiP₃O₁₂, Li₃Fe₂P₃O₁₂, Li₄NbP₃O₁₂, Li₁₊ₓ(M,Al,Ga)ₓ(Ge_{1-y}Ti_{y})₂₋ₓ(PO₄)₃ (0≤x≤0.8, 0≤y≤1.0, M is Nd, Sm, Eu, Gd, Tb, Dy, Ho, Er, Tm or Yb), Li_{1+x+y}QₓTi₂₋ₓSi_{y}P_{3-y}O₁₂ (0<x≤0.4, 0<y≤0.6, Q is Al or Ga), Li₆BaLa₂Ta₂O₁₂, Li₇La₃Zr₂O₁₂, Li₅La₃Nb₂O₁₂, Li₅La₃M₂O₁₂ (M is Nb or Ta), or Li₇₊ₓAₓLa₃₋ₓZr₂O₁₂ (0<x<3, A is Zn).

The anode active material layer may further include additives, e.g., a conductive material, a filler, a dispersing agent, an ion conductive material, or the like. The filler, the dispersing agent, the ion conductive material, or the like. which may be included in the anode coating layer, may be materials known in the related art which are generally used in the all-solid-state battery.

The anode coating layer may have a thickness of 1 µm to 20 µm. For example, the thickness of the anode coating layer may be 1 µm or more, 3 µm or more, 5 µm or more, 20 µm or less, 18 µm or less, 16 µm or less, 14 µm or less, 12 µm or less, 10 µm or less.

The anode current collector may be, for example, indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof, and may have a foil shape or a sheet shape. A thickness of the current collector may be 1 µm to 20 µm, 5 µm to 15 µm, or 7 µm to 10 µm.

The anode current collector may include the metal as a substrate and may further include a thin film on the substrate. The thin film may include an element being capable of forming an alloy with lithium, for example, gold, silver, zinc, tin, indium, silicon, aluminum, bismuth, or a combination thereof, but is not limited thereto and any elements known in the art as long as forming an alloy with lithium may be utilized. If the current collector further includes a thin film, the more flattened lithium-containing layer may be formed, if the lithium is deposited during charging to form the lithium-containing layer, thereby further improving the cycle-life characteristics of the all solid-state battery.

A thickness of the thin film may be 1 nm to 800 nm, 10 nm to 700 nm, 50 nm to 600 nm, or 100 nm to 500 nm. If the thickness of the thin film is within the range, the cycle-life characteristics may be further enhanced.

The anode according to some embodiments may further include a lithium-containing layer between the current collector and the anode coating layer that is formed during the initial charge after the battery preparation. The thickness of the lithium-containing layer may be 1 µm to 1000 µm, 1 µm to 500 µm, 1 µm to 200 µm, 1 µm to 150 µm, 1 µm to 100 µm, or 1 µm to 50 µm. If the thickness of the lithium-containing layer falls in the range, it may effectively perform the role of a lithium reservoir and the cycle-life characteristics may be further enhanced.

The lithium-containing layer may be formed after fabricating the battery during charging, as lithium ions are released from a cathode active material, pass through the solid electrolyte, and migrate toward the anode, and thus, whereby lithium is precipitated and deposited on the anode current collector.

The charging may be a formation process which may be performed at 0.05 C to 1 C at 25 °C to 50 °C one to three time. If lithium is precipitated and deposited to form the lithium-containing layer, lithium included in the lithium-containing layer is ionized during discharging and moves toward the cathode direction, and thus, this lithium may be used as a anode active material.

In some embodiments, as the lithium-containing layer is positioned between the current collector and the anode coating layer, the anode coating layer may serve as a protecting layer for the lithium-containing layer, and thus, the deposition growth of lithium dendrite may be suppressed. This enables to inhibit capacity fading and short-circuit of the all solid-state battery and resultantly improve the cycle-life of the all solid-state battery.

### < Cathode >

The cathode for the all-solid-state battery according to one or more embodiments includes a cathode current collector and a cathode active material layer on one surface of the cathode current collector.

The cathode active material layer may include a cathode active material. The cathode active material may include compounds that reversibly intercalate and deintercalate lithium ions. For example, the cathode active material may include one or more composite oxides of a metal selected from cobalt, manganese, nickel, and a combination thereof, and lithium. The examples of the cathode active material may be LiₐA_{1-b}B¹_{b}D¹₂ (0.90≤a≤1.8, 0≤b≤0.5); LiₐE_{1-b}B¹_{b}O_{2-c}D¹_{c} (0.90≤a ≤1.8, 0≤b≤0.5, 0≤c≤0.5); LiₐE_{2-b}B¹_{b}O_{4-c}D¹_{c} (0.90≤a≤1.8, 0≤b≤0.5, 0≤c≤05); LiₐNi_{1-b-c}Co_{b}B¹_{c}D¹_{α} (0.90≤a≤1.8, 0≤b≤0.5, 0≤c≤0.5, 0<α≤2); LiₐNi_{1-b-c}Co_{b}B¹_{c}O_{2-α}F¹_{α} (0.90≤a≤1.8, 0≤b≤0.5, 0≤c≤0.5, 0<α<2); LiₐNi_{1-b-c}Co_{b}B¹_{c}O_{2-α}F¹₂ (0.90≤a≤1.8, 0≤b≤0.5, 0≤c≤0.5, 0<α<2); LiₐNi_{1-b-c}Mn_{b}B¹_{c}D¹_{α} (0.90≤a≤1.8, 0≤b≤0.5, 0≤c≤0.5, 0<α≤2); LiₐNi_{1-b-c}Mn_{b}B¹_{c}O_{2-α}F¹_{α} (0.90≤a≤1.8, 0≤b≤0.5, 0≤c≤0.5, 0<α<2); LiₐNi_{1-b-c}Mn_{b}B¹_{c}O_{2-α}F¹₂ (0.90≤a≤1.8, 0≤b≤0.5, 0≤c≤0.5, 0<α<2); LiₐNi_{b}E_{c}G_{d}O₂ (0.90≤a≤1.8, 0≤b≤0.9, 0≤c≤0.5, 0.001≤d≤0.1); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMnG_{b}O₂ (0.90≤a≤1.8, 0.001≤b≤0.1); LiₐMn₂G_{b}O₄ (0.90≤a≤1.8, 0.001≤b≤0.1); QO₂; QS₂; LiQS₂; V₂O₅; LiV₂O₅; LiI¹O₂; LiNiVO₄; Li_{(3-f)}J₂(PO₄)₃ (0≤f≤2); Li_{(3-f)}Fe₂(PO₄)₃ (0≤f≤2); or LiFePO₄.

In the chemical formulas A is selected from Ni, Co, Mn, or a combination thereof; B¹ is selected from Al, Ni, Co, Mn, Cr, Fe, Mg, Sr, V, a rare earth element, or a combination thereof; D¹ is selected from O, F, S, P, or combination thereof; E is selected from Co, Mn, or combination thereof; F¹ is selected from F, S, P, or a combination thereof; G is selected from Al, Cr, Mn, Fe, Mg, La, Ce, Sr, V, or a combination thereof; Q is selected from Ti, Mo, Mn, or a combination thereof; I¹ is selected from Cr, V, Fe, Sc, Y, or a combination thereof; J is selected from V, Cr, Mn, Co, Ni, Cu, or a combination thereof; L¹ is selected from Mn, Al, or a combination thereof.

According to some embodiments, the cathode active material may be a ternary lithium transition metal oxide such as LiNiₓCo_{y}Al_{z}O₂(NCA), LiNiₓCo_{y}Mn_{z}O₂(NCM) (wherein, 0<x<1, 0<y<1, 0<z<1, x+y+z=1), or the like.

The compounds may have a coating layer on the surface, or may be mixed with another compound having a coating layer. The coating layer may include at least one coating element compound selected from the group consisting of an oxide of a coating element, a hydroxide of a coating element, an oxyhydroxide of a coating element, an oxycarbonate of a coating element, and a hydroxy carbonate of a coating element. The compound for the coating layer may be amorphous or crystalline. The coating element included in the coating layer may include Mg, Al, Co, K, Na, Ca, Si, Ti, V, Sn, Ge, Ga, B, As, Zr, or mixtures thereof. The coating layer may be formed by any coating method that does not adversely affect the properties of the cathode active material, for example, spray coating, dip coating, or the like, and a detailed description thereof is not illustrated since such methods will be readily understood by those of ordinary skill in the art.

The coating layer may be any coating materials which are known as a coating layer for the cathode active material of the all-solid-state battery. For example, it may be a buffer layer which serves to reduce an interface resistance between the cathode active material and the solid electrolyte. For example, the buffer layer may include lithium-metal-oxide and this metal may be one or more elements selected from Al, B, Ca, Ce, Cr, Fe, Mg, Mo, Nb, Si, Sn, Sr, Ta, V, W, or Zr. The example of the buffer layer may be Li₂O-ZrO₂(LZO), LiNbO₂, or the like.

If the cathode active material is ternary material including nickel, cobalt, and manganese, or nickel, cobalt, and aluminum, the capacity density of the all-solid-state battery may be further improved, and metal dissolution from the cathode active material in a charged state may be further reduced. This may render to further improve long-term reliability and cycle characteristics of the all-solid-state battery in a charged state.

The average particle diameter of the cathode active material may be 1 µm to 25 µm, for example, 3 µm to 25 µm, 1 µm to 20 µm, 1 µm to 18 µm, 3 µm to 15 µm, or 5 µm to 15 µm. For example, the cathode active material may include small particles with an average particle diameter D50 of 1 µm to 9 µm and large particles with an average particle diameter D50 of 10 µm to 25 µm. The cathode active material with a particle diameter range may be harmoniously mixed with other components in the cathode active material layer and may achieve high capacity and high energy density.

The cathode active material may be secondary particles where a plurality of primary particles is agglomerated, or monocrystalline (single crystal). The shape of the cathode active material may be, a spherical shape, a shape close to spherical, or a polyhedron shape, or unspecified shape, or the like.

In the cathode active material layer, an amount of the cathode active material is not limited, and may be in any range which may be applied to a cathode layer of the conventional all-solid-state secondary battery. For example, based on the total 100 wt% of the cathode active material layer, the cathode active material may be included at 55 wt% to 99.5 wt%, for example, 65 wt% to 95 wt%, or 75 wt% to 91 wt%.

The cathode active material layer may further include a binder and/or a conductive material.

The binder may be polyvinyl alcohol, carboxymethyl cellulose, hydroxypropyl cellulose, diacetylcellulose, polyvinylchloride, carboxylated polyvinylchloride, polyvinyl fluoride, polyethylene oxide, polyvinyl pyrrolidone, polyurethane, polytetrafluoroethylene, polyvinylidene fluoride, polyvinylidene fluoride-hexafluoropropylene, polyethylene, polypropylene, a styrene-butadiene rubber, an acrylated styrene-butadiene rubber, an epoxy resin, nylon, or the like, but is not limited thereto.

The binder may be included in an amount of 0.1 wt% to 5 wt%, or 0.1 wt% to 3 wt% based on the total 100 wt% of the cathode active material layer. In the range of amount, the binder may exhibit sufficient adhesion ability without deteriorating the battery performance.

The conductive material is included to provide electrode conductivity, and any electrically conductive material may be used as a conductive material unless it causes a chemical change. Examples of the conductive material may include a carbon-based material such as natural graphite, artificial graphite, carbon black, acetylene black, ketjen black, carbon fiber, carbon nanofiber, carbon nanotube or the like; a metal-based material of a metal powder or a metal fiber including; copper, nickel, aluminum, silver, or the like; a conductive polymer such as polyphenylene derivatives; or mixtures thereof.

The conductive material may be included in an amount of 0.1 wt% to 5 wt%, or 0.1 wt% to 3 wt% based on the total 100 wt% of the cathode active material layer. The conductive material in the above amount range may improve the electrical conductivity without deteriorating battery performance.

The cathode active material layer may further include a solid electrolyte. The solid electrolyte included in the cathode active material layer may be an inorganic solid electrolyte such as a sulfide-based solid electrolyte, an oxide-based solid electrolyte, a halide-based solid electrolyte, or the like, or solid polymer electrolyte. The solid electrolyte is described above with respect to the anode coating layer and may be the same as or different from the solid electrolyte included in the anode layer.

Based on the total weight of the cathode active material layer, the solid electrolyte may be included at an amount of 0.1 wt% to 35 wt%, for example, 1 wt% to 35 wt%, 5 wt% to 30 wt%, 8 wt% to 25 wt%, or 10 wt% to 20 wt%. In the cathode active material layer, based on the total weight of the cathode active material and the solid electrolyte, the cathode active material may be included at an amount of 65 wt% to 99 wt% and the solid electrolyte may be included at an amount of 1 wt% to 35 wt%, for example, the cathode active material may be included at an amount of 80 wt% to 90 wt% and the solid electrolyte may be included at an amount of 10 wt% to 20 wt%. If the solid electrolyte with the amount of the above range is included in the cathode, the efficiency and cycle-life characteristic of the all solid-state battery may be improved, without deterioration of capacity. The solid electrolyte may be included at an amount of 0.1 10 wt% to 30 wt% based on the total 100 wt% of the cathode active material layer.

The cathode current collector may be, for example, indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof, and may have a foil shape or a sheet shape.

### <Elastic layer>

The all-solid-state battery according to one embodiment may further include an elastic layer which may buffer changes in thickness generated during charging and discharging. The elastic layer may be positioned between the anode and a case.

The elastic layer may include a material having an elastic recovery rate of 50 % or more and insulating properties, and in one embodiment, may include silicone rubber, acrylic rubber, fluorinated rubber, nylon, synthetic rubber, or a combination thereof. The elastic material may be present in a form of a polymer sheet.

### < Fabrication of all-solid-state battery >

The all-solid-state battery according to some embodiments may be fabricated by preparing an assembly including a anode, a cathode, and a solid electrolyte layer positioned between the anode and the cathode, and pressing the assembly.

The pressing may be carried out at a temperature of 25 °C to 90 °C. The pressing may be carried out under a pressure of 550 MPa or less, for example, 500 MPa or less, for example, a pressure of 1 MPa to 500 MPa. The pressing time may be varied depending on temperature and pressure, for example, it may be less than 30 minutes. The pressing may be carried out using, for example, isostatic press, roll press, plate press, or warm isostatic press (WIP).

The all-solid-state secondary battery may be a unit battery including a structure of the cathode/ the solid electrolyte layer/the anode, a bicell including a structure of the cathode/the solid electrolyte layer/the anode/the solid electrolyte layer/ the cathode, or a stacked battery where the unit batteries are repeated.

The shapes of the all-solid-state rechargeable battery are not limited, but, for example, a coin-type, a button-type, a sheet-type, a laminate-type, a cylindrical-type, or a flat-type, or the like. The all-solid-state rechargeable battery may be applied to large-sized batteries used in electric vehicles or the like. For example, the all-solid-state rechargeable battery may be also used in hybrid vehicles such as a plug-in hybrid electric vehicle (PHEV), or the like. Furthermore, the all-solid-state rechargeable battery may be utilized in various applications requiring large-capacity energy storage, and for example, may be applied to electric bicycles or power tools. Furthermore, the all-solid-state rechargeable battery may be used in various fields such as portable electronic devices.

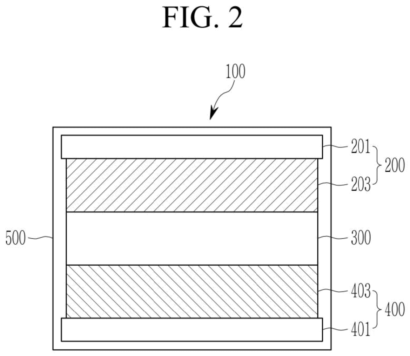

FIG. 2 is a cross-sectional view showing the all solid-state battery according to some embodiments. Referring to FIG. 2, the all solid-state battery 100 may have a structure in which an electrode assembly is stacked with a anode 400 including a anode current collector 401 and a anode coating layer 403, a solid electrolyte layer 300, and a cathode 200 including a cathode active material layer 203 and a cathode current collector 201, is housed in a case such as a pouch, or the like. The all-solid-state battery 100 may further include an elastic layer 500 positioned on the outside of at least one of the cathode 200 and the anode 400. FIG. 2 shows one electrode assembly including a anode 400, a solid electrolyte layer 300, and a cathode 200, but an all-solid-state battery may also be fabricated by stacking at least two electrode assemblies.

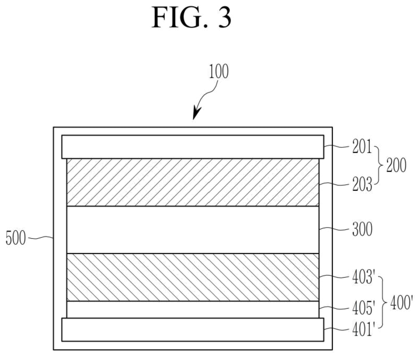

FIG. 3 schematically shows the all-solid-state battery of some embodiments. The all-solid-state battery 100 shown in FIG. 3 includes a cathode 200 including a cathode current collector 201 and a cathode active material layer 203, a anode 400 including a anode current collector 401 and a anode coating layer 403, a solid electrolyte 300 between the cathode 200 and the anode 400, a battery case 500 in which these are housed, and a lithium deposition layer 405' between the anode current collector 401 and the anode coating layer 403. Such a lithium deposition layer may be formed during charging of the all-solid-state battery, as lithium ions are released from the cathode active material and are deposited on the anode current collector 401'.

### MODE FOR PERFORMING THE INVENTION

Hereinafter, examples of the present invention and comparative examples are described. These examples, however, are not in any sense to be interpreted as limiting the scope of the invention.

### (Example 1)

### (1) Preparation of solid electrolyte layer

An argyrodite-type solid electrolyte Li₆PS₅Cl was added to a binder solution in which butyl acrylate polymer was added to an isobutylyl isobutylate, to prepare a mixed liquid (a mixing ratio of solid electrolyte and binder was 98.7:1.3 by weight ratio and viscosity of the mixed liquid (25°C): 2700 cP).

After placing a polyester non-woven fabric (porosity: 70%, thickness: 10 µm) on a release polytetrafluoroethylene film, the mixed liquid having viscosity of 2700 cP was coated on the non-woven fabric and vacuum-dried at 80°C for 2 hours, and then the release polytetrafluoroethylene film was removed. According to this procedure, a solid electrolyte layer having a total thickness of 30 µm, in which the non-woven fabric was disposed at a distance of 2 µm from the interface contacting the cathode, was prepared.

### (2) Preparation of anode

90 wt% of Ag nanoparticles (D50: 60nm) and 10 wt% of carbon black were mixed in a water solvent to prepare an anode coating layer slurry. The carbon black was a mixture of single particles with a particle diameter of 38 nm and secondary particles, and the secondary particles were aggregates in which primary particles with a particle diameter of 76 nm were aggregated and had a particle diameter of 275 nm.

The slurry was coated on a stainless steel foil current collector and dried to prepare an anode including a 12 µm-thick anode coating layer and a 10 µm current collector.

### (3) Preparation of cathode

85 wt% of a LiNi_{0.8}Co_{0.15}Mn_{0.05}O₂ cathode active material, 13.5 wt% of a lithium argyrodite-type solid electrolyte Li₆PS₅Cl, 1.0 wt% of a polyvinylidene fluoride binder, and 0.5 wt% of a carbon nanotubes conductive material were mixed in an N-methyl pyrrolidone solvent to prepare a cathode composition.

The cathode composition was coated on an aluminum cathode current collector, dried, and pressurized to prepare a cathode. The prepared cathode included a 12 µm-thick cathode active material layer and a 10 µm-thick current collector.

### (4) Fabrication of all-solid-state cell

The anode, the solid electrolyte layer, and the cathode were sequentially stacked and the stack was pressed under a press of 8 MPa to fabricate an all solid-state cell. Herein, the non-woven fabric in the solid electrolyte layer was positioned to contact with the cathode active material layer in a direction where the non-woven fabric was positioned at the distance (a) from the interface contacting the cathode.

### (Example 2)

After placing a polyester non-woven fabric (porosity: 80%, thickness: 10 µm) on a release polytetrafluoroethylene film, the mixed liquid having viscosity of 800 cP (at 25°C) was coated on the non-woven fabric and vacuum-dried at 80°C for 2 hours, and then the release polytetrafluoroethylene film was removed. According to this procedure, a solid electrolyte layer having a total thickness of 30 µm, in which the non-woven fabric was disposed at a distance of 13.5 µm from the interface contacting the cathode, was prepared.

An all-solid-state cell was fabricated in the same manner as in Example 1 except that the solid electrolyte layer was utilized.

### (Example 3)

After placing a polyester non-woven fabric (porosity: 90%, thickness: 10 µm) on a release polytetrafluoroethylene film, the mixed liquid having viscosity of 2800 cP (at 25°C) was coated on the non-woven fabric and vacuum-dried at 80°C for 2 hours, and then the release polytetrafluoroethylene film was removed. According to this procedure, a solid electrolyte layer having a total thickness of 100 µm, in which the non-woven fabric was disposed at a distance of 6 µm from the interface contacting the cathode, was prepared.

An all-solid-state cell was fabricated in the same manner as in Example 1 except that the solid electrolyte layer was utilized.

### (Example 4)

After placing a polyester non-woven fabric (porosity: 75%, thickness: 5 µm) on a release polytetrafluoroethylene film, the mixed liquid having viscosity of 800 cP (at 25°C) was coated on the non-woven fabric and vacuum-dried at 80°C for 2 hours, and then the release polytetrafluoroethylene film was removed. According to this procedure, a solid electrolyte layer having a total thickness of 100 µm, in which the non-woven fabric was disposed at a distance of 45 µm from the interface contacting the cathode, was prepared.

An all-solid-state cell was fabricated in the same manner as in Example 1 except that the solid electrolyte layer was utilized.

### (Example 5)

After placing a polyester non-woven fabric (porosity: 78%, thickness: 8 µm) on a release polytetrafluoroethylene film, the mixed liquid having viscosity of 600 cP (at 25°C) was coated on the non-woven fabric and vacuum-dried at 80°C for 2 hours, and then the release polytetrafluoroethylene film was removed. According to this procedure, a solid electrolyte layer having a total thickness of 100 µm, in which the non-woven fabric was disposed at a distance of 48 µm from the interface contacting the cathode, was prepared.

An all-solid-state cell was fabricated in the same manner as in Example 1 except that the solid electrolyte layer was utilized.

### (Example 6)

After placing a polyester non-woven fabric (porosity: 78%, thickness: 10 µm) on a release polytetrafluoroethylene film, the mixed liquid having viscosity of 2000 cP (at 25°C) was coated on the non-woven fabric and vacuum-dried at 80°C for 2 hours, and then the release polytetrafluoroethylene film was removed. According to this procedure, a solid electrolyte layer having a total thickness of 75 µm, in which the non-woven fabric was disposed at a distance of 7.5 µm from the interface contacting the cathode, was prepared.

An all-solid-state cell was fabricated in the same manner as in Example 1 except that the solid electrolyte layer was utilized.

### (Comparative Example 1)

The mixed liquid prepared in Example 1 was coated on a release polytetrafluoroethylene film at a thickness of 30 µm and dried to prepare a solid electrolyte layer. The prepared solid electrolyte layer had a total thickness of 30 µm.

An all-solid-state cell was fabricated in the same manner as in Example 1 except that the solid electrolyte layer was utilized.

### (Comparative Example 2)

After placing a polyester non-woven fabric (porosity: 78%, thickness: 10 µm) on a release polytetrafluoroethylene film, the mixed liquid having viscosity of 3000 cP was coated on the non-woven fabric and vacuum-dried at 80°C for 2 hours, and then the release polytetrafluoroethylene film was removed. According to this procedure, a solid electrolyte layer having a total thickness of 30 µm, in which the non-woven fabric was disposed at a distance of 1.5 µm from the interface contacting the cathode, was prepared.

An all-solid-state cell was fabricated in the same manner as in Example 1 except that the solid electrolyte layer was utilized.

### (Comparative Example 3)

After placing a polyester non-woven fabric (porosity: 80%, thickness: 10 µm) on a release polytetrafluoroethylene film, the mixed liquid having viscosity of 500 cP was coated on the non-woven fabric and vacuum-dried at 80°C for 2 hours, and then the release polytetrafluoroethylene film was removed. According to this procedure, a solid electrolyte layer having a total thickness of 30 µm, in which the non-woven fabric was disposed at a distance of 15 µm from the interface contacting the cathode, was prepared.

An all-solid-state cell was fabricated in the same manner as in Example 1 except that the solid electrolyte layer was utilized.

### (Comparative Example 4)

After placing a polyester non-woven fabric (porosity: 70%, thickness: 10 µm) on a release polytetrafluoroethylene film, the mixed liquid having viscosity of 3000 cP was coated on the non-woven fabric and vacuum-dried at 80°C for 2 hours, and then the release polytetrafluoroethylene film was removed. According to this procedure, a solid electrolyte layer having a total thickness of 100 µm, in which the non-woven fabric was disposed at a distance of 5 µm from the interface contacting the cathode, was prepared.

An all-solid-state cell was fabricated in the same manner as in Example 1 except that the solid electrolyte layer was utilized.

### (Comparative Example 5)

After placing a polyester non-woven fabric (porosity: 78%, thickness: 10 µm) on a release polytetrafluoroethylene film, the mixed liquid having viscosity of 500 cP was coated on the non-woven fabric and vacuum-dried at 80°C for 2 hours, and then the release polytetrafluoroethylene film was removed. According to this procedure, a solid electrolyte layer having a total thickness of 100 µm, in which the non-woven fabric was disposed at a distance of 50 µm from the interface contacting the cathode, was prepared.

An all-solid-state cell was fabricated in the same manner as in Example 1 except that the solid electrolyte layer was utilized.

An all-solid-state cell was fabricated in the same manner as in Example 1 except that the solid electrolyte layer was utilized.

### Experimental Example 1) Evaluation of cycle-life

The all-solid-state cells according to Examples 1 to 6 and Comparative Examples 1 to 5 were charged and discharged at 0.33 C for 100 cycles. A ratio (C) of discharge capacity at 100^{th} cycle relative to discharge capacity at 1^{st} cycle was calculated according to Equation 3. The ratio (C) was classified according to the following criteria and the results are shown in Table 1. [Equation 3] $C = \left(discharge capacity at {100}^{th} cycle/discharge capacity at {1}^{st} cycle\right) * 100$
X: C<90%
O: C≥90%

### Experimental Example 2) 1C discharge capacity

The all-solid-state cells according to Examples 1 to 6 and Comparative Examples 1 to 5 were charged to 4.25 V at 0.1 C and discharged to 2.5 V at 0.1 C, and then charged to 4.25 V at 0.1 C and discharged to 2.5V at 1 C, to measure 1 C discharge capacity. The results are shown in Table 1.

In Table 1, since the thickness of the second layer corresponded to the distance (a) at which the non-woven fabric was positioned from the interface contacting the cathode active material layer, a/b was calculated from the thickness (a) and the thickness of the solid electrolyte layer, and are shown in Table 1.

**Table 1**

| | Solid electrolyte layer thickness (µm) | a/b | Cycle-life | 1C discharge capacity (mAh/g) |
|---|---|---|---|---|
| Example 1 | 30 | 0.067 | O | 168 |
| Example 2 | 30 | 0.45 | O | 165 |
| Example 3 | 100 | 0.06 | O | 167 |
| Example 4 | 100 | 0.45 | O | 165 |
| Example 5 | 30 | 0.48 | O | 168 |
| Example 6 | 75 | 0.1 | O | 168 |
| Comparative Example 1 | 75 | - | Short-circuit | Short-circuit |
| Comparative Example 2 | 30 | 0.05 | Short-circuit | Short-circuit |
| Comparative Example 3 | 30 | 0.5 | X | 121 |
| Comparative Example 4 | 100 | 0.05 | X | 145 |
| Comparative Example 5 | 100 | 0.5 | X | 105 |

As shown in Table 1, the cells according to Examples 1 to 6 having a/b of more than 0.05 and less than 0.3 exhibited excellent cycle-life and high discharge capacity. In Comparative Example 1 without using non-woven fabric, short-circuit occurred and in Comparative Example 2 having a/b of 0.05 and the solid electrolyte layer having a thickness of 30 µm, short-circuit occurred. Comparative Example 3 having a/b of 0.5 and the solid electrolyte layer having a thickness of 30 µm, exhibited degraded cycle-life characteristic and poor discharge capacity. Comparative Examples 4 and 5 having the solid electrolyte layer having a thickness of 100 µm and a/b of 0.05 or 0.5 also exhibited deteriorated cycle-life and extremely low discharge capacity.

### Experimental Example 3) Evaluation of FE-SEM (Field Emission SEM)

The cross-section of the all-solid-state cell according to Example 6, i.e., the assembly in which the anode, the solid electrolyte layer, and the cathode were stacked, was flattened by cross polishing and then the cross-section was analyzed using FE-SEM.

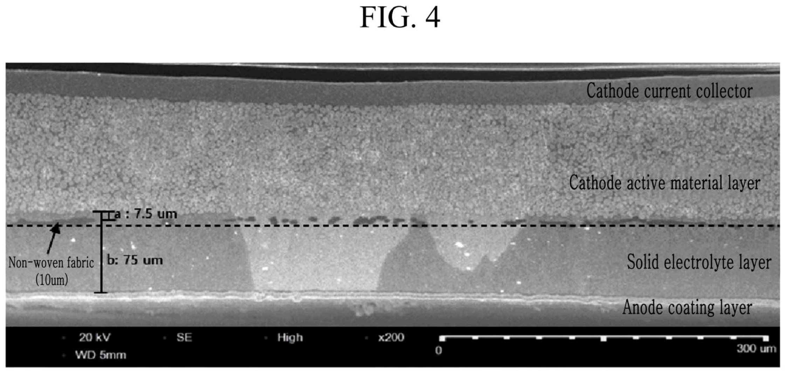

The results are shown in FIG. 4. FIG. 4 indicated that the 10 µm-thick non-woven fabric was positioned at a distance of 7.5 µm from the interface contacting the cathode active material layer. That is, it was clearly seen that a/b was 0.1.

While this invention has been described in connection with what is presently considered to be practical example embodiments, it is to be understood that the invention is not limited to the disclosed embodiments. On the contrary, it is intended to cover various modifications and equivalent arrangements included within the spirit and scope of the appended claims.

## Claims

1. An all-solid-state battery, comprising:
a cathode comprising a cathode active material layer;
an anode; and
a solid electrolyte layer between the cathode and the anode and comprising a solid electrolyte and a polymer matrix,
wherein a thickness (b) of the solid electrolyte layer is 30 µm to 100 µm,
the polymer matrix is disposed within the solid electrolyte layer at a predetermined distance (a) from an interface of the solid electrolyte layer in contact with the cathode, and
the predetermined distance (a) and the thickness (b) of the solid electrolyte layer satisfy the relationship expressed by Equation 1. [Equation 1] $0.05 < \left(a/b\right) < 0.5$

2. The all-solid-state battery as claimed in claim 1, wherein the predetermined distance (a) and the thickness (b) of the solid electrolyte layer satisfy the relationship expressed by Equation 2. [Equation 2] $0.05 < \left(a/b\right) < 0.3$

3. The all-solid-state battery as claimed in claim 1, wherein the polymer matrix comprises polyester, polyethylene terephthalate, polypropylene, polyethylene, or a combination thereof.

4. The all-solid-state battery as claimed in claim 1, wherein the polymer matrix has a thickness of 5 µm to 10 µm.

5. The all-solid-state battery as claimed in claim 1, wherein the polymer matrix has a porosity of 50% to 99%.

6. The all-solid-state battery as claimed in claim 1, wherein an amount of the polymer matrix is 0.01 wt% to 50 wt% based on 100 wt% of the solid electrolyte layer.

7. The all-solid-state battery as claimed in claim 1, wherein an amount of the solid electrolyte is 50 wt% to 99.9 wt% based on 100 wt% of the solid electrolyte layer.

8. The all-solid-state battery as claimed in claim 1, wherein the anode comprises a carbon-based material and a metal.

9. The all-solid-state battery as claimed in claim 8, wherein the carbon-based material is amorphous carbon, crystalline carbon, or a combination thereof.

10. The all-solid-state battery as claimed in claim 8, wherein the carbon-based material is amorphous carbon.

11. The all-solid-state battery as claimed in claim 8, wherein the metal is Ag, Au, Sn, Zn, Al, Mg, Ge, Cu, In, Ni, Bi, Pt, Pd, or a combination thereof.

12. The all-solid-state battery as claimed in claim 8, wherein the metal is Ag.

13. The all-solid-state battery as claimed in of claim 1, wherein the solid electrolyte is a sulfide-based solid electrolyte.
